(19) Europäisches Patentamt — European Patent Office — Office européen des brevets

(11) **EP 3 390 959 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
***G01B 11/06*** *(2006.01)*  ***G01N 21/3581*** *(2014.01)*
***G01B 11/02*** *(2006.01)*  ***G01B 11/245*** *(2006.01)*

(21) Anmeldenummer: **16828924.7**

(22) Anmeldetag: **12.12.2016**

(86) Internationale Anmeldenummer:
**PCT/DE2016/100577**

(87) Internationale Veröffentlichungsnummer:
**WO 2017/101906 (22.06.2017 Gazette 2017/25)**

(54) **TERAHERTZ-MESSVERFAHREN UND TERAHERTZ-MESSVORRICHTUNG ZUM ERMITTELN EINER SCHICHTDICKE ODER EINES ABSTANDES EINES MESSOBJEKTES**

TERAHERTZ MEASUREMENT METHOD AND TERAHERTZ MEASURING APPARATUS FOR ASCERTAINING A LAYER THICKNESS OR A DISTANCE OF A MEASUREMENT OBJECT

PROCÉDÉ DE MESURE TÉRAHERTZ ET DISPOSITIF DE MESURE TÉRAHERTZ POUR LA DÉTERMINATION D'UNE ÉPAISSEUR DE COUCHE OU D'UNE DISTANCE À UN OBJET À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015 DE 102015122205**

(43) Veröffentlichungstag der Anmeldung:
**24.10.2018 Patentblatt 2018/43**

(73) Patentinhaber: **iNOEX GmbH Innovationen und Ausrüstungen für die Extrusionstechnik**
**49324 Melle (DE)**

(72) Erfinder:
• **THIEL, Marius**
**49090 Osnabrück (DE)**
• **KLOSE, Ralph**
**49324 Melle (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
**DE-A1-102013 217 038    DE-A1-102013 223 945**
**DE-B3-102014 214 046    US-A1- 2010 195 090**

• **J. HAUCK ET AL: "Terahertz inline wall thickness monitoring system for plastic pipe extrusion", AIP CONFERENCE PROCEEDINGS, 1. Januar 2014 (2014-01-01), Seiten 86-89, XP055155617, ISSN: 0094-243X, DOI: 10.1063/1.4873740**

EP 3 390 959 B1

**Beschreibung**

Die Erfindung betrifft ein Verfahren und eine Terahertz-Messvorrichtung zum Messen einer Schichtdicke oder eines Abstandes eines Messobjektes.

Hierbei wird Terahertz-Strahlung entlang einer optischen Achse auf das Messobjekt aus einem für THz-Strahlung transparenten Material, z. B. Kunststoff, eingestrahlt, das für die Terahertz-Strahlung einen gegenüber Luft oder Vakuum deutlich höheren Brechungsindex aufweist. Ein derartiges Material kann insbesondere ein Kunststoff, weiterhin jedoch z. B. auch Holz, Keramik oder ein faserverstärktes Material wie CFK oder GFK (kohlefaserverstärkter Kunststoff, glasfaserverstärkter Kunststoff) sein. Ein Teil der einfallenden Terahertz-Strahlung wird beim Eintritt in die Material-Schicht reflektiert, und ein Teil der in die Material-Schicht eingetretenen Terahertz-Strahlung wird an einer nachfolgenden Grenzfläche, zum Beispiel einer Hinterseite oder Rückseite der Material-Schicht beim Übergang zu Luft, reflektiert. Somit können Mess-Peaks der Amplitude der an den Grenzflächen reflektierten Strahlung aufgenommen werden und die zeitliche Differenz der beiden Mess-Peaks als Laufzeit des doppelten Durchquerens der Material-Schicht gewertet werden. Somit kann die Schichtdicke der Material-Schicht an der untersuchten Stelle ermittelt werden. Weiterhin kann auch ein Abstand des Messobjektes zu der Sende- und Empfangseinheit ermittelt werden, so dass auch Außendimensionierungen des Messobjektes wie z. B. ein Außendurchmesser bestimmt werden können.

Derartige Terahertz- Schichtdicken-Messungen können insbesondere zur Überprüfung der Qualität eines Kunststoff-Objektes nach dessen Herstellung durchgeführt werden, z. B. unmittelbar nach der Herstellung, indem das Messobjekt am Ende einer Produktionslinie direkt durch die Transporteinrichtung weiter zu der bzw. durch die Messvorrichtung befördert wird.

Hierbei zeigt sich jedoch, dass insbesondere bei einer kontinuierlichen Vermessung von Messobjekten am Ende einer Produktionslinie eine genaue Ausrichtung der Terahertz-Messvorrichtung zum Bildobjekt nicht immer möglich ist. Bei einer ungenauen Zentrierung des Messobjektes, zum Beispiel einer fehlenden Rohrmittellage eines Kunststoffrohres in der Messvorrichtung, fällt die einfallende Terahertz-Strahlung mit ihrer optischen Achse nicht mehr genau senkrecht auf die Oberfläche des Messobjektes ein, sodass die an den Grenzflächen reflektierte Strahlung nicht mehr entlang der optischen Achse zurück zu der Sende- und Empfangseinheit gestrahlt wird und sich die Signalstärke bzw. Amplitudenstärke aufgrund der seitlichen Abstrahlung erheblich reduziert.

Somit ist ein hoher Positionieraufwand, zum Beispiel durch mechanische Führungen des Messobjektes erforderlich; weiterhin ist eine unmittelbare Vermessung nach der Herstellung eines Kunststoff-Objektes, bei zum Teil noch weichen Kunststoff-Materialen, zum Teil nicht möglich.

Die DE 10 2013 223 945 A1 zeigt eine Messvorrichtung und ein Verfahren zum Vermessen von Prüfobjekten mit Sender-Empfänger-Einheit und einer Spiegelanordnung, die einen ersten, elliptisch geformten Spiegel aufweist, in dessen einem Brennpunkt ein vestellbarer zweiter Spiegel zum Umlenken der Strahlung zwischen einer quer zu der x-y-Ebene des elliptischen Spiegels verlaufenden z-Richtung und der x-y-Ebene ausgebildet. Hierbei wird der zweite Spiegel kontinuierlich derartig gedreht, dass er den aus der z-Richtung einfallenden Strahl in die x-y-Ebene umlenkt, um die Strahlung nach anschließender Reflexion am elliptischen Spiegel unter unterschiedlichen Winkeln auf das Prüfobjekt einzustrahlen.

Die DE 10 2014 214 046 B3 beschreibt eine Messvorrichtung und ein Verfahren zum Vermessen von Prüfobjekten, bei dem ein Sender in einer x-y-Ebene Strahlung von einem Strahlpunkt aussendet. Hierbei ist eine Kollimator-Fokussier-Anordnung mit Kollimator-Fokussier-Elementen zur Umformung der emittierten Strahlung in kollimierte Strahlung und zur Fokussierung der reflektierten Strahlung in den Strahlpunkt vorgesehen, wobei benachbarte Kollimator-Fokussier-Elemente jeweils einen Winkel von 90 Grad einschließen. Weiterhin ist eine Spiegel-Anordnung mit Spiegel-Elementen zum Umlenken der kollimierten Strahlung und der reflektierten Strahlung zwischen der Kollimator-Fokussier-Anordnung und einem Prüfobjektaufnahmebereich vorgesehen.

In AIP Proceedings "Terahertz inline wall thickness monitoring system for plastic pipe extrusion", Hauck, Stich, Heidemeyer et al, AIP Conference Proceedings 1593, 86 (2014), ist ein Terahertz inline wall thickness monitoring system beschrieben, um Kunststoff-Rohre zu vermessen.

Die US 2010/0195090A1 beschreibt eine Vorrichtung zum kontaktlosen Messen einer Dicke eines Farbfilms mittels eines Terahertz-Puls-Licht- erzeugenden Teils, der ein Terahertzu-Puls-Licht erzeugt, das dann optisch weiter verarbeitet wird. Das von einem Objekt reflektierte Terahertz-Puls-Licht wird dann aufgenommen.

Der Erfindung liegt die Aufgabe zugrunde, eine sichere Terahertz-Vermessung eines Messobjektes und eine genaue Ermittlung einer Schichtdicke und/oder eines Abstandes zu ermöglichen.

Diese Aufgabe wird durch ein Messverfahren nach dem unabhängigen Anspruch 1 sowie eine Terahertz-Messvorrichtung nach dem unabhängigen Anspruch 10 gelöst. Die Unteransprüche beschreiben bevorzugte Weiterbildungen.

Hierbei ist die erfindungsgemäße Terahertz-Messvorrichtung insbesondere zur Durchführung des erfindungsgemäßen Verfahrens vorgesehen, und das erfindungsgemäße Verfahren wird insbesondere mit Einsatz oder unter Verwendung der erfindungsgemäßen Terahertz-Messvorrichtung durchgeführt.

Somit wird eine Messvorrichtung mit mindestens einer Terahertz-Sende- und Empfangseinheit geschaffen, deren optische Achse verstellbar ist und während der Vermessung des Messobjektes verstellt wird.

Hierbei wird die optische Achse der ausgesandten Terahertz-Strahlung kontinuierlich bzw. periodisch um einen Verstellbereich verstellt, und in mehreren Verstell-Positionen des Verstellbereichs eine Messung durchgeführt. Die Verstellung kann insbesondere durch Schwenken bzw. Drehen erfolgen, so dass die optische Achse um einen Verstellwinkel verstellt wird und in mehreren Winkel-Positionen des Verstellwinkels eine Messung durchgeführt wird. Weiterhin sind auch translatorische Verstellungen möglich. Nach den Messungen werden die Amplituden der mehreren Messungen, die innerhalb des Verstellbereichs aufgenommen wurden, miteinander verglichen und die Messung mit dem größten Messsignal, d.h. der größten Amplitude der empfangenen Terahertz-Strahlung als beste Messung bzw. Messung mit einem Einfallswinkel, der einem senkrechten Einfall am nächsten liegt, herangezogen. Diese Messung kann direkt als des Messverfahrens herangezogen werden, oder auch zur Nachführung der optischen Achse dienen.

Bei einer derartigen kontinuierlichen Verstellung der optischen Achse innerhalb eines Verstellbereichs, z. B. Verstellwinkels, werden somit einige

Vorteile erreicht:
Es können mit geringem Aufwand Messungen mit ganz oder weitgehend senkrechten Einfall der Terahertz-Strahlung erfolgen, die zu einem hohen Signal und genauen Messungen führen.

Hierbei ist keine Verstellung bzw. Nachführung des Messobjektes selbst erforderlich, was bei einigen Kunststoff-Produkten, insbesondere direkt nach der Produktion bei weichem Material, technisch aufwendig ist. So kann erfindungsgemäß insbesondere ein kontinuierliches bzw. im Endlos-Vorgang hergestelltes Kunststoff-Produkt, wie z. B. ein Kunststoff-Rohr oder eine Kunststoff-Folie, direkt nach der kontinuierlichen Herstellung durch die Messvorrichtung vermessen werden.

Weiterhin kann mit einer periodischen Verstellung der optischen Achse innerhalb eines Verstellbereichs ein fortlaufender Verstell-Vorgang erreicht werden, ohne jeweils zum Beispiel den Messkopf spezifisch auf eine ermittelte Fehl-Justierung einzustellen; es reicht die nachfolgende Auswertung, welche Messung die maximale Amplitude zeigt, so dass diese Messung direkt herangezogen werden kann. Hierbei sind zum Beispiel auch keine Zwischen-Stopps des Verstell-Motors zur Aufnahme der einzelnen Messungen in verschiedenen Einstell-Positionen bzw. Mess-Positionen erforderlich; die Messungen können während der periodischen Verstellung ohne eine Stopp des Verstell-Motors erfolgen, da die Laufzeit der Terahertz-Strahlung sehr gering ist und innerhalb einer Messung keine relevante mechanische Verstellung der optischen Achse erfolgt.

Die Verstellung der optischen Achse kann gemäß unterschiedlicher Ausführungsformen erfolgen:
So kann zum einen ein Messkopf mit seiner optischen Achse als Ganzes verstellt werden, zum Beispiel mittels eines Winkel-Verstellmotors oder z. B. eines translatorischen Verstellmotors. Alternativ hierzu können der Sender und der Empfänger der Terahertz-Strahlung auch fest bleiben, und die Terahertz-Strahlung über eine optische Anordnung, zum Beispiel eine Spiegel-Anordnung mit mindestens einem verstellbaren Spiegel, zum Beispiel MetallSpiegel, Prisma oder anderer spiegelnder Oberfläche, so dass die zu verstellenden Masse gering ist. So kann zum Beispiel ein verstellbarer Spiegel im Strahlengang kontinuierlich um den halben Verstellwinkel verstellt werden. Hierbei kann zur Anzeige der optischen Achse des Terahertz-Strahls auch zum Beispiel ein Laserstrahl in sichtbarem Bereich ergänzend eingekoppelt werden.

Die Verstellung kann in einer oder zwei Achsen erfolgen. Bei Verstellung in nur einer Achse kann die Verstellung insbesondere senkrecht zur Transportrichtung, d.h. um eine Verstellachse parallel zur Transportrichtung erfolgen. Weiterhin kann zur Verstellung einer Achse ergänzend zum Beispiel auch eine Variation des Abstandes eines Messkopfes zum Messobjekt erfolgen. Bei einer Verstellung um zwei Achsen können z. B. die Verstellwinkel der beiden Achsen bzw. Richtungen unterschiedlich sein, je nach zu untersuchenden Messobjekt; so kann ein Verstellwinkel senkrecht zu einer Transportrichtung oder Förderrichtung des zu untersuchenden Messobjektes größer sein, da hier Fehl-Justierung bzw. Lagerfehler, zum Beispiel Rohrlagerfehler eines zu untersuchenden Kunststoff-Rohres, zu größeren Winkel-Fehlern führen als bei einer Fehlstellung der Oberfläche des Messobjektes entlang der Transportrichtung.

Bei einer Messvorrichtung mit mehreren, zum Beispiel in Umfangsrichtung verteilt angeordneten Terahertz-Sende- und Empfangseinrichtungen können die Messergebnisse bzw. aus den Messungen ermittelte Werte auch miteinander verglichen und für die anderen Terahertz-Sende- und Empfangseinrichtungen herangezogen werden. So kann aus der Laufzeit des Terahertz-Signals auch der Abstand der Oberfläche zur Sende- und Empfangseinheit bzw. deren Messkopf ermittelt werden, und hieraus zum Beispiel die Position oder Abweichung der Symmetrieachse eines Kunststoff-Rohres von einer Achsenmitte der Messvorrichtung ermittelt werden.

Erfindungsgemäß kann insbesondere eine Schichtdicke und/oder ein Abstand des Messobjektes, z. B. auch eine Außendimensionierung ermittelt werden. Die Schicht kann z. B. eine Wand eines Messobjektes sein, weiterhin auch ein Freiraum, z. B. der Innenraum eines Rohres als luftgefüllte Schicht.

Die Terahertz-Strahlung kann insbesondere im Frequenzbereich von 0,01 THz bis 50 THz, insbesondere 0,05 THz bis 20 THz, eingesetzt werden. Hierbei kann die Terahertz-Strahlung insbesondere vollelektronisch mittels eines Sende- und Empfangs-Dipols ausgestrahlt und empfangen werden.

Die Messungen und Auswertungen können im Zeitraum oder auch fouriertransformiert im Frequenzraum durchgeführt werden.

Die Erfindung wird im Folgenden anhand der beiliegenden Zeichnungen an einigen Ausführungsformen erläutert. Es zeigen:

Fig. 1 einen Schnitt durch eine Messvorrichtung zur Vermessung eines als Rohr ausgebildeten Messobjektes bei ungenauer Zentrierung ohne bzw. vor der Anpassung der Winkellage;

Fig. 2 das Messprinzip der Ermittlung einer Schichtdicke bzw. Wanddicke eines Messobjektes aus Kunststoff bei einer Terahertz-Wanddickenmessung bei optimaler Zentrierung der Messvorrichtung;

Fig. 3 das Messprinzip aus Figur 2 bei ungenauer Zentrierung der Messvorrichtung;

Fig. 4 die Messsituation mit dem Verfahren zur Vermessung einer Schichtdicke gemäß einer Ausführungsform der Erfindung;

Fig. 5 eine Ausführungsform einer Messvorrichtung bei ungenauer Winkeleinstellung; und

Fig. 6 die der Figur 5 entsprechende Ausbildung bei nachfolgender Kompensation durch Winkeleinstellung der Messvorrichtung:

Fig. 7, 8 eine Ausführungsform mit translatorischer Verstellung einer Spiegel-Anordnung;

Fig. 9, 10 eine Ausführungsform mit translatorischer Verstellung eines Messkopfs der Terahertz-Messvorrichtung; und

Fig. 11, 12 eine Ausführungsform mit translatorischer Verstellung eines Aufnahmerings der Messvorrichtung.

Eine Terahertz-Messvorrichtung 1 dient zur Vermessung eines Messobjektes 2, das hier ein Kunststoffrohr 2 ist, mit einer zylinderförmigen bzw. rohrförmigen Wand 3 der Wanddicke d. Die Messvorrichtung 1 kann insbesondere direkt in-line am Ende des Herstellungsprozesses, zum Beispiel eines Extruders, vorgesehen sein und entsprechend wird das Kunststoff-Rohr 2 in Längsrichtung, das heißt Produktionsrichtung und Förderrichtung, durch die Terahertz-Messvorrichtung 1 geführt.

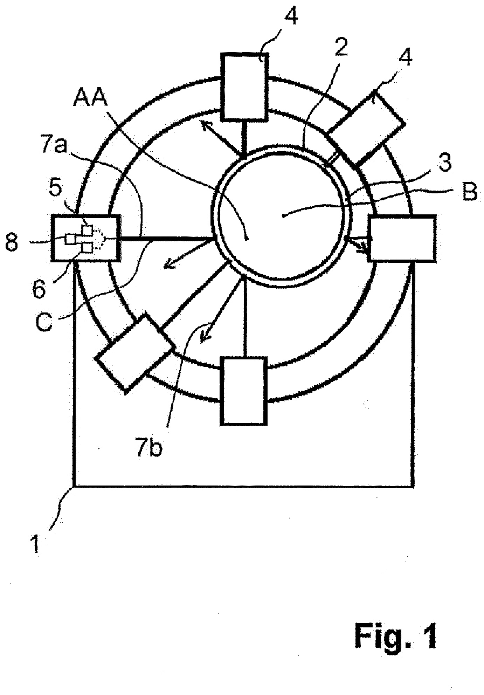

Idealerweise wird das Kunststoff-Rohr 2 zentral bzw. mittig, das heißt mit seiner Rohr-Achse B auf der Symmetrieachse AA der Terahertz- Messvorrichtung 1 geführt; es kann jedoch gemäß Figur 1 eine dezentrale Lage, das heißt ein Rohrlagefehler mit einer Abweichung der Rohrachse B von der Symmetrieachse AA vorliegen. Derartige Fehllagen können aufgrund eines Durchhängens des Kunststoff-Rohres 2 bzw. auch aufgrund von Schwingungen, bzw. des nachgiebigen Materials des frisch extrudierten Kunststoff-Rohres 2 erfolgen.

Die Terahertz-Messvorrichtung 1 weist mehrere Terahertz-Sende-und Empfangseinheiten 4 auf, die über den Umfang der Terahertz- Messvorrichtung 1 verteilt angeordnet in das Innere, gemäß Figur 1 auf die Symmetrieachse AA hin ausgerichtet sind.

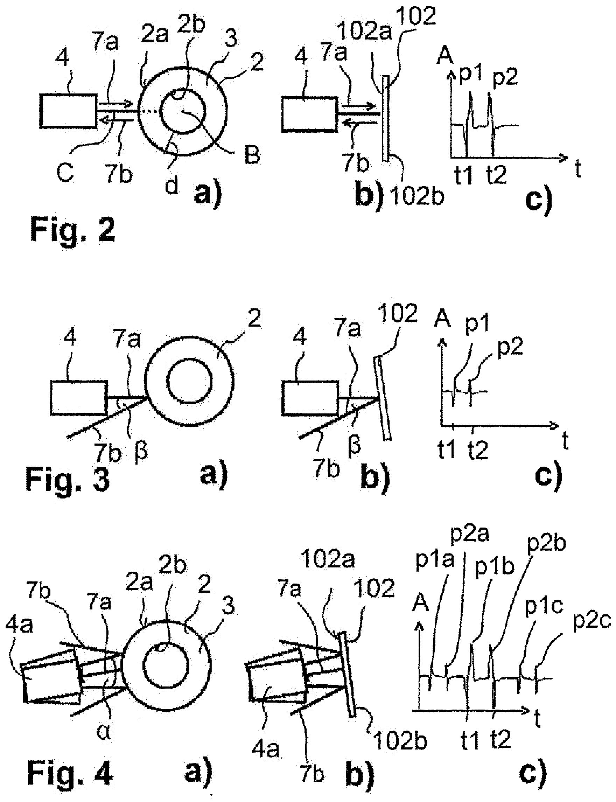

Die Terahertz-Sende-und Empfangseinheiten 4 weisen jeweils einen in Fig. 1 angedeuteten Terahertz-Sender 5 auf zum Aussenden von Terahertz-Strahlung 7a, insbesondere im Frequenzbereich von 0,01 THz bis 50 THz, insbesondere 0,05 THz bis 20 THz, und insbesondere von 0,1 THz bis 10 THz, sowie eine angedeutete Empfangseinrichtung 6 für zurück-reflektierte Terahertz-Strahlung 7b in diesem Frequenzbereich auf. Die Ermittlung erfolgt in einer Steuereinrichtung 8, wobei jede Terahertz-Sende-und Empfangseinheiten 4 eine eigenen Steuereinrichtung 8 aufweisen kann oder eine gemeinsame Steuereinrichtung 8 für die mehreren Terahertz-Sende-und Empfangseinheiten 4 vogesehen ist. Die Figuren 2 bis 4 zeigen das Messprinzip detaillierter:

Fig. 2 zeigt Messungen bei korrekter Ausrichtung. Gemäß Figur 2a sendet die Terahertz-Sende-und Empfangseinheit 4 Terahertz-Strahlung 7a zentral auf das Kunststoff-Rohr 2; gemäß der Figur 2b wird entsprechend Terahertz-Strahlung 7a vertikal auf eine als Messobjekt dienende Kunststoff-folie 102 eingestrahlt. Das Kunststoff-Material der beiden Messobjekte 2 und 102 ist jeweils für die Terahertz-Strahlung 7 transparent; während jedoch Vakuum oder Luft einen Brechungsindex von n=1 aufweisen, weist das Kunststoff-Material einen Brechungsindex von etwa n=1,5 auf. Somit tritt an den Grenzflächenübergängen, das heißt auf der Rohrwand-Außenseite 2a und der Rohrwand-Innenseite 2b, bzw. der Folien-Außenseite 102a und der Folien-Innenseite 102b, jeweils eine teilweise Reflektion der Terahertz-Strahlung 7 bzw. statt. Figur 2c zeigt das Messdiagramm der Amplitude A der empfangenen Terahertz-Strahlung, bei der Messpeak p1 bei der Zeit t1 und der Messpeak p2 bei der Zeit t2 zu erkennen sind, deren zeitlicher Abstand t2-t1 den Laufzeitunterschied der Terahertz-Strahlung 7 beim zweimaligen Durchlaufen der Rohrwand 3 mit Wanddicke d und Brechungsindex n widergibt, d.h. z. B. $d=c(t2-t1)/2n$

Bei der ungenauen Zentrierung gemäß Figur 3, die somit auch bei den meisten Terahertz-Sende- und Empfangseinheiten 4 der Figur 1 vorliegt, verläuft die optische Achse C der Terahertz-Sende- und Empfangseinheit 4 gemäß Fig. 3a nicht durch die Rohrachse B des Kunststoff-Rohrs 2 bzw. gemäß Figur 3b nicht senkrecht zu der Kunststoff-Folie 102, sodass der reflektierte Terahertz-Strahl 7b nicht genau auf der optischen Achse C zurückreflektiert wird, sondern unter einem Fehllage-Winkel β ‡ 0 zu der optischen Achse C versetzt zurückreflektiert wird. Gemäß Figur 3c ist somit eine schwache Amplitude des Messsignals zu erkennen, die bei größerem Fehllage-Winkel auch ganz verschwinden kann. Neben einem schwächeren Signal können auch Fehler in der Messung auftreten.

Erfindungsgemäß wird die Winkellage, bzw. eine Fehl-Justierung der optischen Achse C der Terahertz-Sende- und Empfangseinheit 4 gegenüber der Oberfläche 2a oder 102a, ermittelt und korrigiert, oder aber durch Messung und Vergleich bei mehreren Winkellagen eine senkrechte Messung ermittelt.

Hierbei ist eine Ausbildung vorgesehen, mit der eine Messung bei senkrechter Ausrichtung der optische Achse erreicht wird.

Es werden mehrere Messungen innerhalb eines Verstellwinkelbereichs α durchgeführt und aus den Messungen die ordnungsgemäße Lage, d.h. ein senkrechter Einfall der optischen Achse C zur Messoberfläche 2a oder 102a ermittelt. Auch hierzu sind mehrere Ausbildungen möglich:

In Figur 4 ist ein Messkopf 4a motorisch in seiner Winkellage in ein oder zwei Achsen verstellbar, sodass die optische Achse C des Messkopfes 4a in ein oder zwei Richtungen verstellt wird. Hierbei kann auch z. B. ergänzend zur der Verstellung einer Achse eine Entfernung d4 vom Messkopf 4a zum Prüfobjekt 2 oder 102 variiert werden.

Gemäß der Ausführungsform der Figur 4 kann somit der Messkopf 4a jeder Terahertz-Sende- und Empfangseinheit 4 jeweils separat für sich eingestellt werden, indem eine Verstellung um eine Achse innerhalb eines Verstellwinkelbereichs α unter Messung der Signale gemäß Figur 4c erfolgt, wobei bei den fortlaufenden Messungen eine optimale Winkellage bei den Peaks mit der höchsten Intensität I, gemäß Figur 4c somit den Peaks p1b, p2b, das heißt bei der zweiten der drei Messungen, vorliegt. Somit wurde beim Abscannen dieser Achse in der zweiten Messung mit den Peaks p1b, p2b die optimale Winkellage bzw. senkrechte Winkellage erreicht und nachfolgend überschritten. Die optimale Ausrichtung zum Messobjekt 2 oder 102 wird im Allgemeinen bei dem vollständigen Schwenkvorgang bzw. Durchscannen des Verstellwinkelbereichs α erreicht bzw. hinreichend genau erreicht, so dass dann keine weitere Messung erforderlich ist und die Messung mit maximaler Amplitude direkt verwendet werden kann.

Dieser Scan durch Veränderung der Winkellage, das heißt Verstellung der optischen Achse C innerhalb des Verstellwinkelbereichs a, kann z. B. in zwei Achsen sukzessive durchgeführt werden.

Die Position des Auftreffens der Terahertz-Strahlung 7, das heißt der Schnittpunkt der optischen Achse C mit der Oberfläche 2a oder 102a, kann auch durch Verstellung der Terahertz-Strahlung 7 bzw. der optischen Achse C, in Kombination mit dem Terahertz-Laufzeitsignal zurückgerechnet und bestimmt werden.

Somit kann zum Beispiel bei der Anordnung aus Figur 1 eine Laufzeit-messung durch eine Terahertz-Sende- und Empfangseinheit 4 auch dazu dienen, nicht nur diese Terahertz-Sende-und Empfangseinheit 4 bzw. ihren gegebenenfalls verstellbaren Messkopf 4a einzustellen, sondern auch durch eine Laufzeitmessung den Abstand des Messobjektes 2 zu der Terahertz-Sende-und Empfangseinheit 4 zu bestimmen, sodass die absolute Position bekannt ist, sodass die Fehl-Positionierung der Rohrachse B gegenüber der Symmetrieachse AA der Messvorrichtung 1 ermittelbar ist, und auf dieser Grundlage auch bereits die anderen Terahertz-Sende-und Empfangseinheiten 4 ausgerichtet bzw. korrigiert werden können. Somit ist bei der Ausbildung nach Figur 1 mit einer Terahertz-Messvorrichtung 1 mit mehreren in Umfangsrichtung angeordneten Terahertz-Sende- und Empfangseinheiten 4 ist nicht erforderlich, das sämtliche Terahertz-Sende- und Empfangseinheiten 4 eine derartige Kompensation der Winkellage bzw. eine Ermittlung der Fehlposition durchführen, um eine Kompensation bzw. Korrektur der Position vorzunehmen.

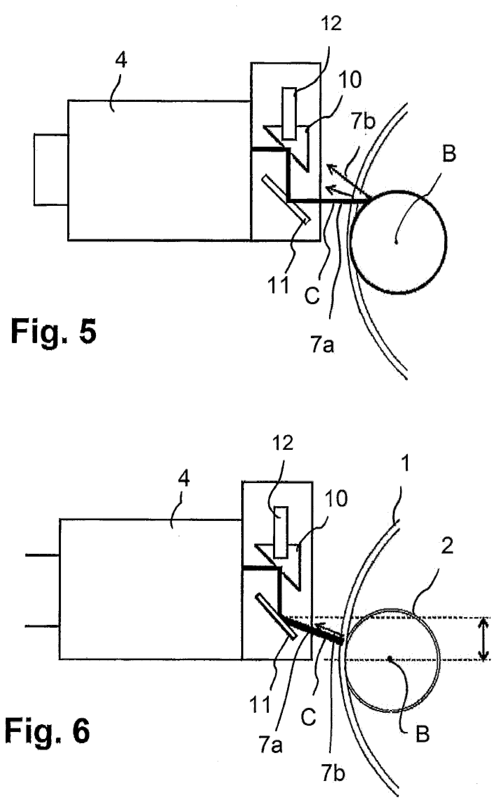

Figur 5 und 6 zeigen eine weitere Ausführungsform, bei der die Kompensation der Winkellage der optischen Achse C der Terahertz-Sende- und Empfangseinheit 4 korrigiert wird, wobei hier nicht ein Messkopf 4a verstellt wird, sondern der Terahertz-Strahl 7 über eine oder mehrere Spiegel 10, 11 abgelenkt wird, zum Beispiel einen festen Spiegel 10 und einen verstellbaren Spiegel 11. Durch Verstellung des verstellbaren Spiegels 11 kann entsprechend die optische Achse C zur Kompensation der Winkellage verstellt werden. Somit kann bei dieser Ausführungsform ein Verstellung des verstellbaren Spiegels um den halben Verstellwinkelbereich α erfolgen, damit die optische Achse C den Verstellwinkelbereich α abscannt, um gemäß dem Diagramm der Figur 4c wiederum bei fortlaufenden Messungen die optimale Winkellage zu ermitteln, wobei die optimale Messung gleich als relevante Messung heran gezogen werden kann.

Gemäß Figur 5 und 6 ist zum Beispiel der feste Spiegel 10 als Prisma oder halbdurchlässiger Spiegel ausgebildet, sodass hier - oder auch an einer anderen Stelle- ein optischer Laser 12 zur als Positionsmarker dem Terahertz-Strahl 7 überlagert werden kann. Die Überlagerung kann zur visuellen Überprüfung dienen, weiterhin kann grundsätzlich auch in der Messvorrichtung 1 eine optische Kamera zur Erfassung der durch den Positionsmarker erzeugten Punkte und Ermittlung der Position des Messobjektes 2, 102 vorgesehen sein.

Somit kann erfindungsgemäß in-line bei Produktion des Messobjektes, zum Beispiel des in Figur 1 gezeigten Kunststoff-Rohrs 2 oder der Kunststoff-Folie 102, fortlaufend eine Winkellage sämtlicher Terahertz-Sende- und Empfangseinheiten 4 korrigiert werden.

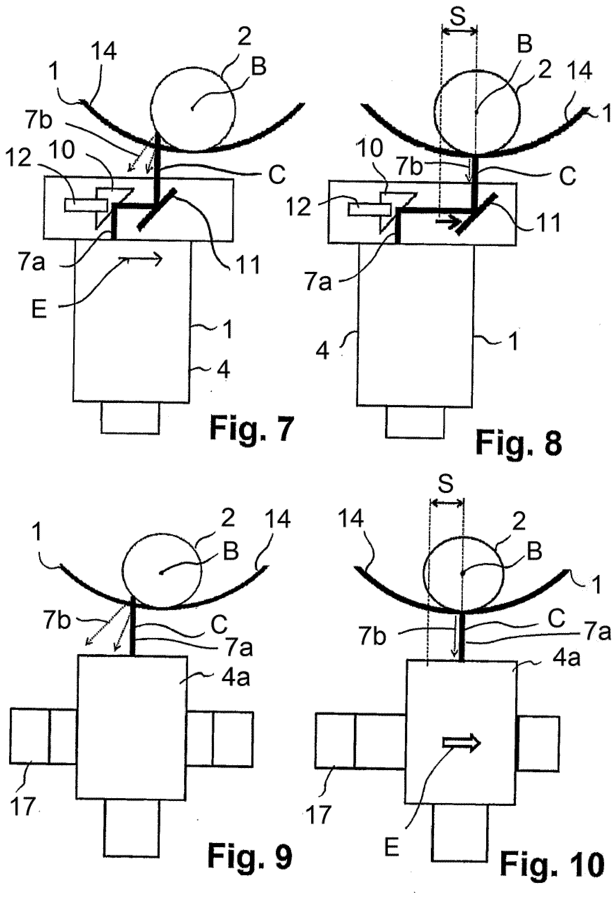

Neben derartigen Winkel-Verstellungen sind weiterhin auch translatorische Verstellungen der optischen Achse C der ausgesandten Terahertz-Strahlung 7a möglich. Die Fig. 7 bis 12 zeigen verschiedene Ausführungen derartiger translatorischer Verstellungen:

Gemäß Fig. 7 und Fig. 8 wird der verstellbare Spiegel 11 nicht geschwenkt, sondern translatorisch verstellt. Die Spiegelflächen des festen Spiegels und des verstellbaren Spiegels 11 verlaufen somit z. B. jeweils parallel zueinander. Somit wird z. B. von der Ausgangsstellung der Fig, 7 aus der verstellbare Spiegel 11 translatorisch verstellt und erreicht in der Position der Fig. 8 die Messposition, bei der die ausgesandte Terahertz-Strahlung 7a senkrecht auf die Wand des Messobjektes 2 fällt, was wiederum als maximale Amplitude oder maximal detektiertes Signal ermittelt wird. Somit werden wiederum mehrere Messpositionen des verstellbaren Spiegels 11 angefahren, in denen Messungen vorgenommen werden. Bei der gezeigten Ausführungsform der Fig. 7 und 8 lenkt der feste Spiegel 10 die ausgesandte Terahertz-Strahlung 7a unter einem rechten Winkel um; bei einer derartigen Ausbildung ist auch eine Verstellung des verstellbaren Spiegels 11 in dieser Verstellrichtung E, die senkrecht zur optischen Achse C und weiterhin senkrecht zur Rohrachse B des Messobjektes 2 verläuft, sinnvoll, wobei jedoch auch andere translatorische Verstellrichtungen möglich sind. Gemäß Fig. 8 wird z. B. eine Verstellstrecke s des verstellbaren Spiegels 11 eingestellt, bis eine Messposition mit senkrechtem Einfall der Terahertz-Strahlung 7a auf das Messobjekt 2 erreicht wird. Die weiteren Erläuterungen zu den o. g. Ausführungsformen gelten für die Ausführungsform der Fig. 7, 8 entsprechend.

Gemäß der Ausführungsform der Fig. 9 und 10 wird nicht nur ein verstellbarer Spiegel 11 einer Spiegelanordnung, sondern der gesamte Messkopf 4a translatorisch entlang einer Führungseinrichtung 17 verstellt, z. B. wiederum in einer Verstellrichtung E senkrecht zur optischen Achse C und senkrecht zur Rohrachse B bzw. Symmetrieachse des jeweiligen Messobjektes 2, so dass wiederum Messungen in den verschiedenen Verstell-Positionen bzw. Mess-Positionen aufgenommen und miteinander verglichen werden können, mit entsprechender Auswertung der Messungen gemäß den obigen Ausführungsformen, so dass gemäß Fig. 10 bei einer Verstellstrecke s ein senkrechter Einfall der Terahertz-Strahlung vorliegt.

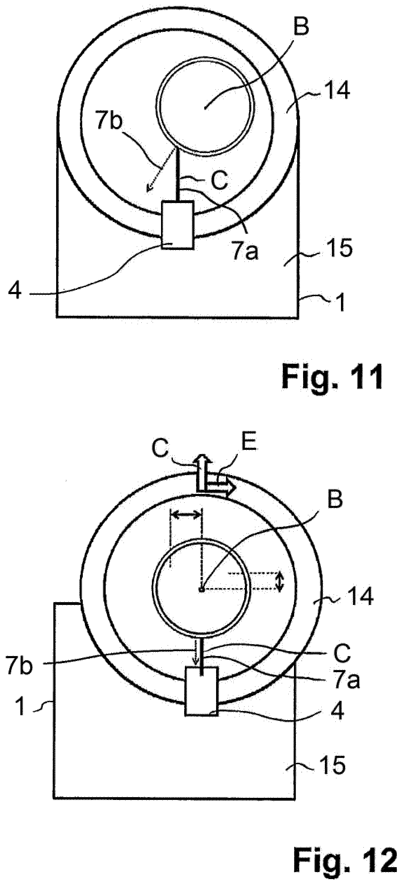

Bei der Ausführungsform der Fig. 11 und 12 wird nicht nur ein einzelner Messkopf 4a, sondern die gesamte Messvorrichtung 1 bzw. ein Aufnahmering 14, an dem die Terahertz-Sende- und-Empfangseinheiten 4 ringförmig angeordnet sind, translatorisch verstellt gegenüber z. B. einem Gestell 15 oder Basis 15 der Terahertz-Messvorrichtung 1. Hierbei können z. B. Verstellungen in zwei Achsen bzw. der Ebene senkrecht zur Rohrachse B und zur Symmetrieachse AA der Messvorrichtung 1 durchgeführt werden, d. h. z. B. wie eingezeichnet in der Verstellrichtung E und einer Verstellrichtung entlang der optischen Achse C, oder einer anderen Achse in dieser Ebene.

Weiterhin sind auch jedwede Kombinationen von Kippungen, d. h. Verstellungen um Verstellwinkel, und translatorischen Verstellungen möglich, sofern sich diese Kombinationen den unabhängigen Ansprüchen 1 und 10 unterordnen lassen.

**Patentansprüche**

1. Verfahren zum Messen einer Schichtdicke (d) oder eines Abstandes eines Messobjektes (2, 102) mit Terahertz-Strahlung (7),
bei dem mindestens ein Terahertz-Strahl (7a) von einer Terahertz-Sende- und Empfangseinheit (4) entlang einer optischen Achse (C) auf das Messobjekt (2, 102) eingestrahlt wird und durch oder auf mindestens eine Schicht (3) des Messobjektes (2, 102) gelangte und reflektierte Terahertz-Strahlung (7) detektiert wird, wobei ein Messsignal (A) der detektierten reflektierten Terahertz-Strahlung (7b) ausgewertet und die Schichtdicke (d) und/oder der Abstand aus einem Laufzeit-Unterschied (t2-t1) der an mindestens einer Grenzfläche (2a, 2b) der Schicht (3) reflektierten Strahlung (7) ermittelt wird,
wobei mehrere Messungen mit unterschiedlichen optischen Achsen (C) durchgeführt werden, wobei die optische Achse (C) der ausgesandten Terahertz-Strahlung (7a) während der Messungen oder zwischen den Messungen verstellt wird und eine der mehreren Messungen zur Ermittlung der Schichtdicke (d) und/oder des Abstandes herangezogen wird,
wobei die optische Achse (C) der ausgesandten Terahertz-Strahlung (7a) kontinuierlich oder fortlaufend oder periodisch über einen Verstellbereich ($\alpha$, s) verstellt wird und während der Verstellung mehrere Messungen aufgenommen werden,
wobei die mehreren Messungen miteinander verglichen werden und eine Messung mit einem maximalen Messsignal (A) als Messung zur Ermittlung der Schichtdicke (d) und/oder des Abstandes herangezogen wird.

2. Verfahren nach Anspruch 1, **dadurch gekennzeichnet, dass** die optische Achse (C) der ausgesandten Terahertz-Strahlung (7a) periodisch oder kontinuierlich in zwei zueinander nicht-parallelen Richtungen, vorzugsweise zwei orthogonalen Richtungen, um Verstellbereiche ($\alpha$, s) verstellt wird.

3. Verfahren nach einem der vorherigen Ansprüche, **dadurch gekennzeichnet, dass** der mindestens eine Verstellbereich ($\alpha$, s) ein Verstellwinkelbereich ($\alpha$) ist.

4. Verfahren nach einem der vorherigen Ansprüche, **dadurch gekennzeichnet, dass** die optische Achse (C) in eine Richtung um den Verstellwinkel ($\alpha$) periodisch verstellt wird, und weiterhin ein Abstand eines die Terahertz-Strahlung (7) aussendenden Messkopfes (4a) zu dem Messobjekt (2) periodisch verstellt wird.

**5.** Verfahren nach einem der vorherigen Ansprüche, **dadurch gekennzeichnet, dass** die optische Achse (C) der ausgesandten Terahertz-Strahlung (7a) durch Schwenken eines Messkopfes (4a) der Terahertz-Sende- und Empfangseinheit (4) um den Verstellwinkel ($\alpha$) verstellt wird.

**6.** Verfahren nach einem der vorherigen Ansprüche, **dadurch gekennzeichnet, dass** die Terahertz-Sende- und Empfangseinheit (4) eine Spiegel-Anordnung (10, 11) mit einem verstellbaren Spiegel (11) zum Umlenken der ausgesandten und reflektierten Terahertz-Strahlung (7, 7a, 7b) aufweist, wobei der verstellbare Spiegel (11) verstellt wird zum Ändern der Richtung der optischen Achse (C).

**7.** Verfahren nach einem der vorherigen Ansprüche, **dadurch gekennzeichnet, dass** eine Position des Auftreffens der ausgesandten Terahertz-Strahlung (7a) auf die Oberfläche (2a, 102a) des Messobjektes (2, 102) aus der Messung, insbesondere einer Laufzeit-Ermittlung, ermittelt und bestimmt wird.

**8.** Verfahren nach einem der vorherigen Ansprüche, **dadurch gekennzeichnet, dass** die optische Achse (C) der ausgesandten Terahertz-Strahlung (7a) während der Messungen oder zwischen den Messungen translatorisch verstellt wird, z. B. in einer Verstellrichtung (E) senkrecht zu der optischen Achse (C).

**9.** Verfahren nach einem der vorherigen Ansprüche, **dadurch gekennzeichnet, dass** ein in einer Herstellungsvorrichtung erzeugtes Kunststoff-Produkt, zum Beispiel ein Kunststoff-Rohr (2) oder eine Kunststoff-Folie (102), nach der Herstellung fortlaufend in einer Transportrichtung an einer Messvorrichtung (1) mit mindestens einer Terahertz-Sende- und Empfangseinheit (4) entlang geführt und durch die Terahertz-Sende- und Empfangseinheit (4) auf eine Schichtdicke, zum Beispiel Wanddicke (d), untersucht wird,
wobei die optische Achse (C) der ausgesandten Terahertz-Strahlung (7a) senkrecht zu der Transportrichtung ausgerichtet ist und in einer Ebene senkrecht zur Transportrichtung verstellt wird,
wobei die Schichtdicke (d) durch eine Laufzeit-Messung ermittelt wird, bei der eine zeitliche Differenz (t2-t1) zwischen einem ersten Mess-Peak (p1) der Reflektion beim Eintritt der Terahertz-Strahlung (7a) in eine Oberfläche (2a, 102a) der Schicht (d) und einem zeitlich nachfolgenden zweiten Mess-Peak (p2) nach Transmission der Schicht (d) und Reflexion bei Austritt aus der Schicht (d) ermittelt wird, wobei die Schichtdicke d ermittelt wird aus

$$d=c(t2-t1)/2n,$$

mit c der Lichtgeschwindigkeit im Vakuum, n dem Brechungsindex des Kunststoff-Materials für die Terahertz-Strahlung (7) und (t2-t1) der zeitlichen Differenz zwischen dem ersten Mess-Peak (p1) und dem zweiten Mess-Peak (p2).

**10.** Terahertz-Messvorrichtung (1) zur Messung einer Schichtdicke (d) und/oder eines Abstandes eines Kunststoff-Messobjektes (2, 102), mit einer Terahertz-Sende- und Empfangseinheit (4) mit einem Sender (5) zum Aussenden von Terahertz-Strahlung (7a) entlang einer optischen Achse (C) auf das Messobjekt (2, 102) und einem Empfänger (6) zum Empfangen der von dem Messobjekt (2, 102) reflektierten Terahertz-Strahlung (7b),
einer Steuereinrichtung (8) zur Ermittlung der Schichtdicke (d) aus einem Laufzeit-Unterschied der an einer ersten Grenzfläche oder Außenfläche (2a) der Schicht reflektierten Terahertz-Strahlung und der nach Durchtritt durch die Schicht an einer zweiten Grenzfläche reflektierten Terahertz-Strahlung,
wobei zumindest ein Teil der Terahertz-Sende- und Empfangseinheit (4) verstellbar ist zum Verstellen der optischen Achse (C) um einen Verstellbereich ($\alpha$, s) und die Steuereinrichtung (8) ausgelegt ist, aus einem Vergleich mehrerer Messungen bei unterschiedlichen Einstellungen der optischen Achse (C) die Schichtdicke (d) zu ermitteln,
wobei die Steuereinrichtung (8) ausgelegt ist, die optische Achse (C) der ausgesandten Terahertz-Strahlung (7a) kontinuierlich oder fortlaufend oder periodisch über einen Verstellbereich ($\alpha$, s) zu verstellen und während der Verstellung mehrere Messungen aufzunehmen,
wobei die Steuereinrichtung (8) ausgelegt ist, die mehreren Messungen miteinander zu vergleichen und eine Messung mit einem maximalen Messsignal (A) als Messung zur Ermittlung der Schichtdicke (d) und/oder des Abstandes heranzuziehen.

**11.** Terahertz-Messvorrichtung (1) nach Anspruch 10, **dadurch gekennzeichnet, dass** ein Messkopf (4a) der Terahertz-Messvorrichtung (1) in mindestens einer Schwenkachse um den Verstellbereich, insbesondere Verstellwinkel (a), verstellbar ist.

**12.** Terahertz-Messvorrichtung (1) nach Anspruch 10 oder 11, **dadurch gekennzeichnet, dass** sie eine Spiegelanordnung (10, 11) mit mindestens einem verstellbaren Spiegel (11) aufweist, der zur Verstellung der optischen Achse (C) der ausgesandten Terahertz-Strahlung (7a) um mindestens einen Verstellbereich ($\alpha$, s), vorzugsweise Verstellwinkelbereich (a), verstellbar ist

**13.** Terahertz-Messvorrichtung (1) nach einem der Ansprüche 10 bis 12, **dadurch gekennzeichnet, dass** die Steuereinrichtung (8) die optische Achse (C) periodisch innerhalb eines Verstellbereichs ($\alpha$, s), insbesondere Verstellwinkelbereichs ($\alpha$) verstellt, und in dem Verstellbereich fortlaufend Messsignale aufnimmt, wobei die Steuereinrichtung (8) eine Messung mit maximalem Messsignal als Messung bei senkrechtem Auftreffen auf eine Oberfläche (2a, 102a) des Messobjektes (2, 102) heranzieht.

**Claims**

**1.** Method of measuring a layer thickness (d) or a distance of a measurement object (2, 102) with terahertz radiation (7), in the case of which at least one terahertz beam (7a) is radiated from a terahertz transmission and receiving unit (4) along an optical axis (C) onto the measurement object (2, 102) and terahertz radiation (7) entering and reflected through or onto at least one layer (3) of the measurement object (2, 102) is detected, wherein a measurement signal (A) of the detected and reflected terahertz radiation (7b) is evaluated and the layer thickness (d) and/or the distance is determined from a travel time difference (t2-t1) of the radiation (7) reflected on at least one boundary surface (2a, 2b) of the layer (3), wherein a plurality of measurements are carried out with different optical axes (C), wherein the optical axis (C) of the emitted terahertz radiation (7a) is adjusted during the measurements or between the measurements and one of the plurality of measurements is used to calculate the layer thickness (d) and/or the distance, wherein the optical axis (C) of the emitted terahertz radiation (7a) is adjusted continuously or consistently or periodically over an adjustment range ($\alpha$, s) and a plurality of measurements are recorded during the adjustment, wherein the plurality of measurements are compared with one another and one measurement with a maximum measurement signal (A) is used as a measurement to calculate the layer thickness (d) and/or the distance.

**2.** Method according to claim 1, **characterised in that** the optical axis (C) of the emitted terahertz radiation (7a) is adjusted periodically or continuously in two directions not parallel to one another, preferably two orthogonal directions by adjustment ranges ($\alpha$, s).

**3.** Method according to any one of the preceding claims, **characterised in that** the at least one adjustment range ($\alpha$, s) is an adjustment range ($\alpha$).

**4.** Method according to any one of the preceding claims, **characterised in that** the optical axis (C) is adjusted periodically in one direction by the adjustment angle ($\alpha$) and a distance of a measurement head (4a) emitting the terahertz radiation (7) is further adjusted periodically to the measurement object (2).

**5.** Method according to any one of the preceding claims, **characterised in that** the optical axis (C) of the emitted terahertz radiation (7a) is adjusted by pivoting a measurement head (4a) of the terahertz transmission and receiving unit (4) by the adjustment angle ($\alpha$).

**6.** Method according to any one of the preceding claims, **characterised in that** the terahertz transmission and receiving unit (4) has a mirror arrangement (10, 11) with an adjustable mirror (11) to deflect the emitted and reflected terahertz radiation (7, 7a, 7b), wherein the adjustable mirror (11) is adjusted to change the direction of the optical axis (C).

**7.** Method according to any one of the preceding claims, **characterised in that** a position of the impingement of the emitted terahertz radiation (7a) onto the surface (2a, 102a) of the measurement object (2, 102) is calculated and determined from the measurement, in particular a travel time calculation.

**8.** Method according to any one of the preceding claims, **characterised in that** the optical axis (C) of the emitted terahertz radiation (7a) is adjusted in a translatory manner during the measurements or between the measurements, e.g. in an adjustment direction (E) perpendicular to the optical axis (C).

**9.** Method according to any one of the preceding claims, **characterised in that** a plastic product produced in a manufacturing device, for example a plastic tube (2) or a plastic foil (102), after manufacture, is guided continuously in a transport direction along a measurement device (1) with at least one terahertz transmission and receiving unit (4) and is checked by the terahertz transmission and receiving unit (4) for a layer thickness, for example wall thickness (d), wherein the optical axis (C) of the emitted terahertz radiation (7a) is aligned perpendicular to the transport direction and is adjusted in a plane perpendicular to the transport direction, wherein the layer thickness (d) is calculated by a travel time measurement, in the case of which a time difference (t2-t1) is calculated between a first measurement peak (p1) of the reflection when the terahertz radiation (7a) enters a surface (2a, 102a) of the layer (d) and a second measurement peak (p2) thereafter in time following transmission of the layer (d) and reflection upon exit from the layer (d), wherein the layer thickness d is calculated from

$$d=c(t2-t1)/2n,$$

with c the light speed in the vacuum, n the refraction index of the plastic material for the terahertz radiation (7) and (t2-t1) the time difference between the first measurement peak (p1) and the second measurement peak (p2).

10. Terahertz measurement device (1) for measuring a layer thickness (d) and/or a distance of a plastic measurement object (2, 102), with a terahertz transmission and receiving unit (4) with a transmitter (5) for emitting terahertz radiation (7a) along an optical axis (C) onto the measurement object (2, 102) and a receiver (6) for receiving the terahertz radiation (7b) reflected from the measurement object (2, 102), a control device (8) for calculating the layer thickness (d) from a travel time difference of the terahertz radiation reflected on a first boundary surface or outer surface (2a) of the layer and the terahertz radiation reflected after passing through the layer on a second boundary surface, wherein at least one part of the terahertz transmission and receiving unit (4) is adjustable to adjust the optical axis (C) by an adjustment range (α, s) and the control device (8) is designed to calculate the layer thickness (d) from a comparison of a plurality of measurements for different settings of the optical axis (C), wherein the control device (8) is designed to adjust the optical axis (C) of the emitted terahertz radiation (7a) continuously or consistently or periodically over an adjustment range (α, s) and to record a plurality of measurements during the adjustment, wherein the control device (8) is designed to compare a plurality of measurements with one another and to use a measurement with a maximum measurement signal (A) as the measurement to calculate the layer thickness (d) and/or the distance.

11. Terahertz measurement device (1) according to claim 10, **characterised in that** a measurement head (4a) of the terahertz measurement device (1) is adjustable in at least one pivot axis by the adjustment range, in particular adjustment angle (α).

12. Terahertz measurement device (1) according to claim 10 or 11, **characterised in that** it has a mirror arrangement (10, 11) with at least one adjustable mirror (11), which is adjustable to adjust the optical axis (C) of the emitted terahertz radiation (7a) by at least one adjustment range (α, s), preferably adjustment angle range (α).

13. Terahertz measurement device (1) according to any one of claims 10 to 12, **characterised in that** the control device (8) adjusts the optical axis (C) periodically within an adjustment range (α, s), in particular adjustment angle range (α) and records measurement signals continuously in the adjustment range, wherein the control device (8) uses a measurement with maximum measurement signal as the measurement in the case of perpendicularly impinging onto a surface (2a, 102a) of the measurement object (2, 102).

**Revendications**

1. Procédé de mesurage d'une épaisseur de couche (d) ou d'une distance d'un objet à mesurer (2, 102) au moyen d'un rayonnement térahertz (7), procédé dans lequel l'objet à mesurer (2, 102) est exposé à au moins un faisceau térahertz (7a) provenant d'une unité d'émission et de réception de rayonnement térahertz (4) le long d'un axe optique et le rayonnement térahertz parvenu à travers au moins une couche (3) de l'objet à mesurer (2) et réfléchi par celle-ci est détecté, un signal de mesure du rayonnement térahertz réfléchi détecté étant évalué et l'épaisseur de couche (d) et/ou la distance étant déterminée à partir d'une différence de temps de propagation du rayonnement (7) réfléchi à au moins une interface (2a, 2b) de la couche (3), plusieurs mesures étant effectuées suivant différents axes optiques (C), l'axe optique (C) du rayonnement térahertz (7a) étant déplacé pendant les mesures ou entre celles-ci et l'une des multiples mesures étant utilisée pour la détermination de l'épaisseur de la couche (d) et/ou de la distance,

   L'axe optique (C) du rayonnement térahertz (7a) émis étant déplacé en continu et/ou périodiquement à l'intérieur d'une plage d'angles de déplacement (α, s) et (les multiples) plusieurs mesures sont enregistrées, parmi lesquelles la mesure d'amplitude maximale est utilisée en tant que mesure pour déterminer l'épaisseur de couche.

2. Procédé suivant la revendication 1, **caractérisé en ce que** l'axe optique (C) du rayonnement térahertz (7a) émis périodiquement ou en continu dans deux directions non parallèles l'une à l'autre, de préférence, dans deux directions orthogonales, est déplacé à l'intérieur de plages de déplacement (a, s).

3. Procédé suivant une des revendications précédentes, **caractérisé en ce que** l'au moins une plage de déplacement (α, s) est une plage d'angles de déplacement (α).

4. Procédé suivant une des revendications précédentes, **caractérisé en ce que** l'axe optique (C) est déplacé périodiquement à l'intérieur de l'angle de déplacement (α) et qu'en plus une distance d'une tête de mesure (4a) émettant le rayonnement térahertz (7) par rapport à l'objet à mesurer (2) est modifiée périodiquement.

5. Procédé suivant une des revendications précédentes, **caractérisé en ce que** l'axe optique (c) du rayonnement térahertz (7a) émis est déplacé d'un certain angle de déplacement ($\alpha$) en pivotant une tête de mesure (4a) de l'unité d'émission et de réception térahertz (4).

6. Procédé suivant une des revendications précédentes, **caractérisé en ce que** l'unité d'émission et de réception térahertz (4) présente un ensemble-miroir (10, 11) avec un miroir réglable (11) pour réorienter le rayonnement térahertz émis et réfléchi (7, 7a, 7b), le miroir réglable (11) étant réglé pour modifier la direction de l'axe optique (C).

7. Procédé suivant une des revendications précédentes, **caractérisé en ce qu'**une position d'incidence du rayonnement térahertz (7a) sur la surface (2a, 102a) de l'objet à mesurer (2, 102) est relevée et déterminée à partir du mesurage, en particulier d'un relevé du temps de propagation.

8. Procédé suivant une des revendications précédentes, **caractérisé en ce que** l'axe optique (C) du rayonnement térahertz (7a) est déplacé pendant les mesurages ou entre les mesurages par translation, par exemple dans une direction de déplacement (E) perpendiculairement à l'axe optique (C).

9. Procédé suivant une des revendications précédentes, **caractérisé en ce qu'**un produit en matière artificielle, par exemple un tuyau en matière plastique (2) ou une feuille en matière plastique (102) fabriqué dans un dispositif de production est, après la fabrication, continuellement transporté dans un dispositif de transport le long d'un dispositif de mesure (1) avec au moins une unité d'émission et de réception térahertz (4) et une épaisseur de couche, par exemple, une épaisseur de paroi (d) est examinée par l'unité d'émission et de réception térahertz, l'axe optique (C) du rayonnement térahertz (7a) est orienté verticalement à la direction de transport et déplacé verticalement par rapport à la direction de transport sur un plan, l'épaisseur de couche (d) étant relevée au moyen d'un mesurage du temps de propagation, lors duquel une différence de temps (t2-t1) entre un premier pic de mesure (p1) de réflexion lors de l'entrée du rayonnement térahertz (7a) dans une surface (2a, 102a) de la couche (d) et un second pic de mesure (p2) séquentiel après transmission de la couche (d) et réflexion lors de la sortie de la couche (d), l'épaisseur de couche (d) étant relevée à partir de

$$D=c(t2-t1)/2n$$

Avec c de la vitesse de la lumière sous vide, n de l'indice de réfraction du matériau en matière plastique pour le rayonnement térahertz (7) et (t2-t1) de la différence de temps entre le premier pic de mesure (p1) et le second pic de mesure (p2).

10. Dispositif de mesure (1) destiné à mesurer une épaisseur de couche (d) et/ou une distance d'un objet à mesurer en matière artificielle (2, 102) avec une unité d'émission et de réception (4) avec un émetteur destiné à émettre un rayonnement térahertz (7a) le long d'un axe optique (6) pour

Recevoir le rayonnement térahertz (7b) réfléchi par l'objet à mesurer (2, 102),

Un dispositif de commande (8) destiné à relever l'épaisseur de couche (d) à partir d'une différence de temps de propagation entre le rayonnement térahertz réfléchi sur une première interface ou surface extérieure (2a) et le rayonnement térahertz réfléchi sur une seconde interface après son passage à travers la couche,

Au moins une partie de l'unité d'émission et de réception (4) étant réglable pour le déplacement de l'axe optique (C) d'une/ à l'intérieur d'une plage de déplacement ($\alpha$, s) et le dispositif de commande (8) étant conçu pour relever l'épaisseur de couche (d) à partir d'une comparaison de plusieurs mesures à différents déplacements de l'axe optique (C),

Le dispositif de commande (8) étant conçu pour déplacer l'axe optique (C) du rayonnement térahertz émis (7a) en continu ou en permanence ou périodiquement à l'intérieur d'une plage de déplacement ($\alpha$, s) et relever plusieurs mesures pendant le déplacement, le dispositif de commande (8) étant conçu pour comparer les plusieurs mesures entre elles et de retenir une mesure avec un signal de mesure (A) maximal en tant que mesure pour relever l'épaisseur de couche (d) et/ou la distance.

11. Dispositif de mesure térahertz (1) suivant la revendication 10, **caractérisé en ce qu'**une tête de mesurage (4a) du dispositif de mesure térahertz (1) est réglable dans au moins un axe de pivotement de la /à l'intérieur de la plage de déplacement, en particulier, de l'angle de déplacement ($\alpha$).

12. Dispositif de mesure térahertz (1) suivant la revendication 10 ou 11, **caractérisé en ce qu'**il présente un agencement de miroir (10, 11) comportant au moins un miroir réglable (11), qui peut être réglé sur au moins une plage de réglage ($\alpha$, s), de préférence sur une plage d'angle de déplacement pour le déplacement de l'axe optique (C) du rayonnement térahertz (7a) émis.

**13.** Dispositif de mesure térahertz (1) suivant une des revendications 10 à 12, **caractérisé en ce que** le dispositif de commande (8) déplace l'axe optique (C) périodiquement à l'intérieur d'une plage de réglage (α, s), en particulier d'une plage d'angle de déplacement (α) et reçoit en permanence des signaux de mesure dans cette plage de réglage, le dispositif de commande (8) retenant une mesure avec un signal de mesurage maximal comme mesure à incidence verticale sur une surface (2a, 102a) de l'objet à mesurer (2, 102).

**Fig. 1**

Fig. 2

Fig. 3

Fig. 4

Fig. 5

Fig. 6

**Fig. 7**

**Fig. 8**

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013223945 A1
- DE 102014214046 B3
- US 20100195090 A1

**In der Beschreibung aufgeführte Nicht-Patentliteratur**

- **HAUCK ; STICH ; HEIDEMEYER et al.** Terahertz in-line wall thickness monitoring system for plastic pipe extrusion. *AIP Conference Proceedings,* 2014, vol. 1593, 86